# EUROPÄISCHE PATENTANMELDUNG

(11) **EP 1 842 721 A2**
(43) Veröffentlichungstag der Anmeldung: **10.10.2007**
(21) Anmeldenummer: 07006465.4
(22) Anmeldetag: 29.03.2007
(51) Int. Cl.: B60P 3/38

(54) **Hochbettleiter für Fahrzeuge**

(30) Priorität: 07.04.2006 DE 202006005723 U
(71) Anmelder: Hymer AG, 88339 Bad Waldsee (DE)
(72) Erfinder: Hohl, Bernd, 88339 Bad Waldsee (DE); Ehl, Stefan, 88214 Ravensburg (DE)
(74) Vertreter: Riebling, Peter

(57) **Zusammenfassung**

Die Erfindung betrifft eine Hochbettleiter (4), insbesondere für ein Hubbett (1) für Fahrzeuge wie Wohnmobile oder Wohnwagen oder dergleichen, wobei das Bett (1) eine Liegefläche (2), einen Rahmen (3), sowie eine dazwischen befindliche Auflage wie z.B. Lattenrost aufweist, und wobei die Leiter (4) in ihrer oberen Stauposition unterhalb der Auflage der Liegefläche (2) verstaubar ist und aus dieser oberen Stauposition in eine obere Zwischenposition ausziehbar ist, sowie von dieser oberen Zwischenposition über mindestens zwei Schwenkgelenke (11) um eine etwa horizontale Achse in eine untere Nutzposition herabschwenkbar ist, dadurch gekennzeichnet, dass die Leiter (4) über ihre mindestens zwei Schwenkgelenke (11) mittelbar oder unmittelbar mit einer ausziehbaren Schiene (10) verbunden ist, welche das Ausziehen der Leiter (4) von ihrer oberen Stauposition in ihre obere Zwischenposition ermöglicht, und dass die Leiter (4) an der ausziehbaren Schiene (10) derart angebracht ist, dass die Längsachse der Leiter (4) in ihrer abgeschwenkten unteren Nutzposition etwa parallel zur Richtung desjenigen Rahmenteils (3c) des Rahmens (3) des Bettes (1) verläuft, welches dem Innenraum des Fahrzeugs zugewandt ist. Vorteil ist, dass nun die Leiter erfindungsgemäß sowohl in der Nutzposition, als auch in der Stauposition längs zur Liegerichtung des Hochbetts ausgerichtet ist. Hierdurch wird gewährleistet, dass die Leiter in ihrer Nutzposition über ihre gesamte Länge parallel nahe an dem Gestell des Hochbetts verläuft und sich der Nutzer daran festhalten kann. Weiterhin muss der Nutzer sich beim Einsteigen in das Hochbett und beim Aussteigen aus diesem nur um 90° drehen, was zu einer wesentlichen Erhöhung der Sicherheit und Bequemlichkeit beiträgt. Weiterhin kann die Leiter einfach und rasch als ganzes unterhalb des Hochbettes in dessen Längsrichtung verstaut werden, ohne die Leiter verkleinern, z.B. teleskopieren, zu müssen, was zu einer Erhöhung der Bequemlichkeit als auch einer Kosteneinsparung beiträgt. Auch wird durch die parallele Nutzposition der Leiter zum Hochbett kostbarer Platz im davor liegenden Wohnraum gewonnen. Weiterer Vorteil ist die hohe Stabilität und Standsicherheit der Leiter durch die zwei Schwenklager.

## Beschreibung

Die Erfindung betrifft eine Hochbettleiter für Fahrzeuge, und insbesondere ein Hubbett für Wohnmobile oder Wohnwagen oder dergleichen, nach dem Oberbegriff des Patentanspruchs 1.

Die DE 202 19 175 U1 zeigt eine derartige Leiter in einem Wohnmobil für ein Alkovenbett, die zwischen Fahrerhaus, Bodenplatte Schlafraum und Lattenrost in Führungsschienen aus- und einschiebbar geführt ist und dort verstaubar ist. Die Leiter ist sowohl in ihrer Benutzungs- als auch in ihrer Verstauposition längs zur Fahrtrichtung des Wohnmobils angeordnet. Nachteil ist, dass die Leiter in ihrer Benutzungsposition relativ viel Platz vor dem Bett benötigt, der frei gehalten werden muss und als Wohn- und anderweitige Nutzfläche nicht mehr zur Verfügung steht. Weiterhin kann sich ein im unteren Teil der Leiter befindlicher Nutzer nur an den Sprossen oder Holmen der Leiter festhalten, nicht aber am Rahmen des Bettes selbst.

Die DE 101 09 054 A1 zeigt eine Einstiegshilfe (Leiter) für eine Liege in einem Führerhaus eines LKW. Die Leiter weist geneigt aufeinander zu verlaufende Seitenholme mit einem gemeinsamen Kugel-Kopfteil auf, welches in einem zugeordneten Lagerteil am Rahmen der Liege, längsverschieblich zur Liegerichtung, in sich drehbar und relativ zur Liege schwenkbar ausgebildet ist. Die Leiter wird in ihrer Staulage auf der Unterseite der Liege durch einhaken in Rasthaken fixiert, so dass die Leiter in Längsrichtung der Liegefläche orientiert ist. Das Kugel-Kopfteil mit zugehörigem Lagerteil zur Längsverstellbarkeit, Drehbarkeit und Schwenkbarkeit ist relativ aufwändig in seiner Herstellung und daher kostenintensiv und ist durch die vielen Freiheitsgrade der Beweglichkeit nur bei genauester Handhabung optimal standfest.

Aufgabe der Erfindung ist es daher, eine gattungsgemäße unterhalb der Liegefläche verstaubare Leiter für ein Hochbett, insbesondere Hubbett in Fahrzeugen derart weiterzubilden, dass ein Nutzer das Bett über die Leiter wesentlich bequemer und sicherer erreichen kann, sowie dieses wieder wesentlich bequemer und sicherer verlassen kann. Weiterhin soll auch bei einem sehr hoch angeordneten Hochbett die Leiter einfach aufgebaut und daher kostengünstig sein.

Zur Lösung der Aufgaben dienen die Merkmale des Patentanspruches 1.

Wesentlich dabei ist, dass die Leiter über ihre mindestens zwei Schwenkgelenke mittelbar oder unmittelbar mit einer ausziehbaren Schiene verbunden ist, welche das Ausziehen der Leiter von ihrer oberen Stauposition in ihre obere Zwischenposition ermöglicht, und dass die Leiter an der ausziehbaren Schiene derart angebracht ist, dass die Längsachse der Leiter in ihrer abgeschwenkten unteren Nutzposition etwa parallel zur Richtung desjenigen Rahmenteils des Rahmens des Bettes verläuft, welches dem Innenraum des Fahrzeugs zugewandt ist.

Vorteil ist, dass nun die Leiter erfindungsgemäß sowohl in der Nutzposition, als auch in der Stauposition längs zur Liegerichtung des Hochbetts ausgerichtet ist und die Leiter in ihrer Nutzposition über ihre gesamte Länge parallel nahe an dem Gestell und Rahmen des Hochbetts parallel zu diesen verläuft, wodurch sich der Nutzer daran festhalten kann. Weiterhin muss der Nutzer sich beim Einsteigen in das Hochbett und beim Aussteigen aus diesem nur um 90° drehen, was zu einer wesentlichen Erhöhung der Sicherheit und Bequemlichkeit beiträgt. Weiterhin kann die Leiter einfach und rasch als ganzes unterhalb des Hochbettes in dessen Längsrichtung verstaut werden, ohne die Leiter verkleinern, z.B. teleskopieren, zu müssen, was zu einer Erhöhung der Bequemlichkeit, als auch einer Kosteneinsparung beiträgt. Auch wird durch die parallele Nutzposition der Leiter zum Hochbett kostbarer Platz im davor liegenden Wohnraum gewonnen. Weiterer Vorteil ist die hohe Stabilität und Standsicherheit der Leiter durch die zwei Schwenklager.

Vorteilhafte Weiterbildungen der Erfindung sind Gegenstand der abhängigen Ansprüche.

Vorteilhaft ist, wenn die Schiene mitsamt der Leiter etwa quer oder aber parallel zur Liegerichtung des Bettes verschiebbar ist.

Weiterhin ist vorteilhaft, wenn die Leiter mit beiden Holmen über den Rahmen hinaus verschiebbar ist, da dann die gesamte Breite der Leiter genutzt werden kann. In einer anderen Ausführungsform ist es aber auch vorgesehen, dass die Leiter nur mit dem ersten Holm über den Rahmen hinaus verschoben wird, der zweite Holm aber innerhalb des Rahmens verbleibt, so dass mehr Platz vor dem Bett verbleiben kann.

Bevorzugt sind zwei zueinander parallele Seitenholme der Leiter vorgesehen, jedoch können die Seitenholme auch leicht im Winkel verlaufen oder nur der innere Seitenholm parallel zum Bettrahmenteil verlaufen und der abgewandte Seitenholm schräg hierzu verlaufen. Wichtig ist jedoch immer, dass im Bereich der Anlenkung an die Schiene mindestens zwei Schwenkgelenke vorhanden sind, welche eine Bewegung der Leiter nur um einen bzw. zwei Freiheitsgrade ermöglicht, nämlich die Verschwenkung der Leiter um eine horizontale Achse (sowie Linearverschiebung quer zur Liegefläche), und welche eine eindeutige Aufstandsfläche auf dem Boden des Fahrzeugs und damit genügende Standfestigkeit und Stabilität mit sich bringen.

Insbesondere sind zwei Leiterholme mit je einem Schwenkgelenk am oberen Ende vorhanden. Die Schwenkgelenke sind insbesondere an Winkelteilen schwenkbar angelenkt, die wiederum mit der verschiebbaren Schiene fest verbunden sind.

Die insbesondere C-förmige Schiene selbst kann teleskopierbar ausgeführt sein und ist in einer bettrahmenfesten insbesondere C-förmigen Gleitführung aufgenommen. Natürlich kann jede beliebige Form der Schienen (z.B. X-Form) und auch eine kugelgelagerte Führung der Schiene vorgesehen sein.

Das untere freie Ende der Leiter, welches der Schiene und den Schwenkgelenken gegenüber liegt, wird in einer bettrahmenfesten L- oder U-förmigen Gleitführung aufgenommen, welche unterhalb der Liegefläche parallel zur insbesondere C-förmigen Gleitführung für das obere Ende der Leiter mit den Schwenkgelenken angeordnet ist.

Die gesamte Leiteranordnung ist in ihrer Stauposition derart unterhalb der Liegefläche des Hochbettes an dessen Rahmen befestigt, dass diese Leiteranordnung nicht oder nur geringfügig nach unten hin über den Rahmen des Hochbettes hinaus ragt.

Insbesondere wird die erfindungsgemäße Leiter an einem in der Höhe verstellbaren Hubbett in einem Wohnmobil oder Caravan eingesetzt, so dass die Länge der Leiter nicht über die Länge des Bettes hinausgeht, ja sogar nur einen Teil (ca. 75%) davon ausmacht. Damit muss die Leiter nicht teilbar oder teleskopierbar ausgebildet sein und ist daher sehr kostengünstig. Bevorzugt ist dabei das erfindungsgemäße Hub/Hochbett quer zur Fahrtrichtung des Fahrzeugs angeordnet, kann aber in anderen Ausführungen durchaus auch in Fahrtrichtung des Fahrzeugs angeordnet sein.

Im Folgenden wird die Erfindung anhand von lediglich einen Ausführungsweg darstellende Zeichnungen näher erläutert. Hierbei gehen aus den Zeichnungen und ihrer Beschreibung weitere wesentliche Merkmale und Vorteile der Erfindung hervor.

Es zeigt:
Figur 1: Das erfindungsgemäße Hochbett als Hubbett mit der Leiter in Stauposition;
Figur 2: Das Hubbett nach Figur 1 in abgesenkter Stellung mit der Leiter in ausgezogener, aber noch nicht nach unten verschwenkter Zwischenposition;
Figur 3: Das Hubbett nach Figur 2 mit der Leiter in ausgezogener und nach unten verschwenkter Nutzposition;
Figur 4: Perspektivische und vergrößerte Ansicht der Leiteranordnung der Figuren 1-3 ohne Hubbett;
Figur 5: Seitenansicht von Figur 4.

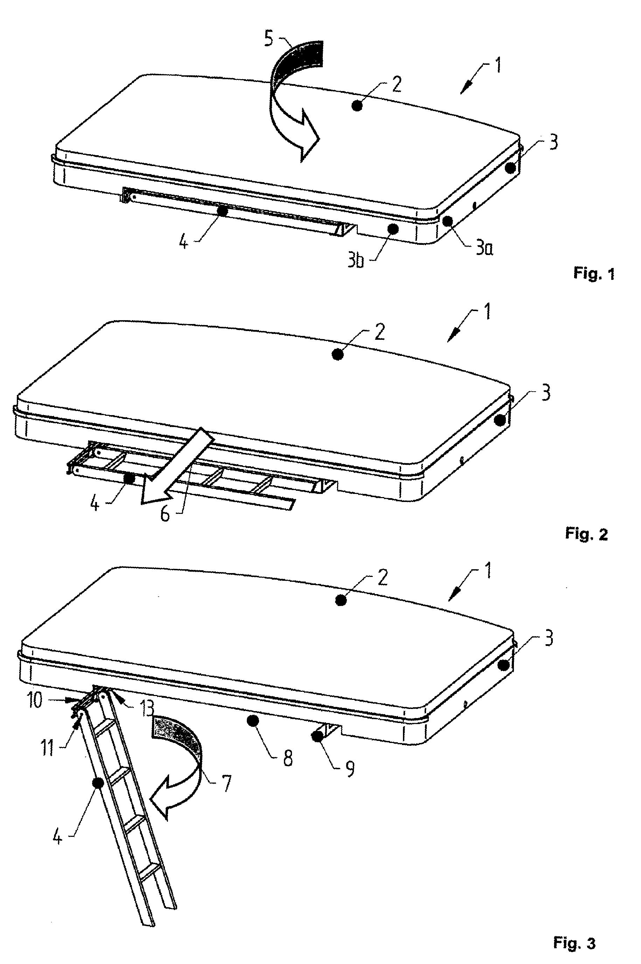

Figuren 1-3 zeigen das erfindungsgemäße Hochbett in Form eines Hubbetts 1, welches aus einer Liegefläche 2 bzw. Matratze besteht, die auf einem nicht gezeigten Lattenrost als Auflage ruht, der wiederum in einer Rahmenkonstruktion 3 aufgenommen ist. Die Rahmenkonstruktion 3 besteht aus zwei parallelen kurzen Rahmenseiten 3a, 3b und zwei langen Rahmenseiten 3c, 3d, wovon die in das Fahrzeuginnere weisende Rahmenseite 3c gerade ausgebildet ist und das zur Fahrzeugaußenwand weisende Rahmenseite 3d zur Fahrzeugaußenwand hin gewölbt ausgebildet ist. Durch die konvexe Wölbung der äußeren Rahmenseite 3d ergibt sich im herunterverschwenkten Benutzungszustand des Hubbetts 1 kein oder nahezu kein Spalt zwischen Bett 1 und Fahrzeugaußenwand. Der Rahmen 3 besitzt eine seitliche zentrale Ausnehmung 8 in der vorderen langen Seite 3c des Rahmens 3, die dem Innenraum (Wohnraum) des Fahrzeugs zugewandt ist, zur Aufnahme der eingeschobenen Leiter 4.

Das Aufbauen des Hubbetts 1 geschieht in der Reihenfolge der Figuren 1, 2 und 3.

Zunächst wird gemäß Figur 1 das Hubbett 1 von einer oberen Staustellung in Absenkrichtung 5 in eine untere Nutzstellung gebracht. Durch die Hubmechanik (z.B. 4-oder 6-Gelenk-Kinematik) wird das Hubbett 1 auf einer bogenförmigen Kurve (Pfeil Absenkrichtung 5) nach unten in Nutzstellung gebracht.

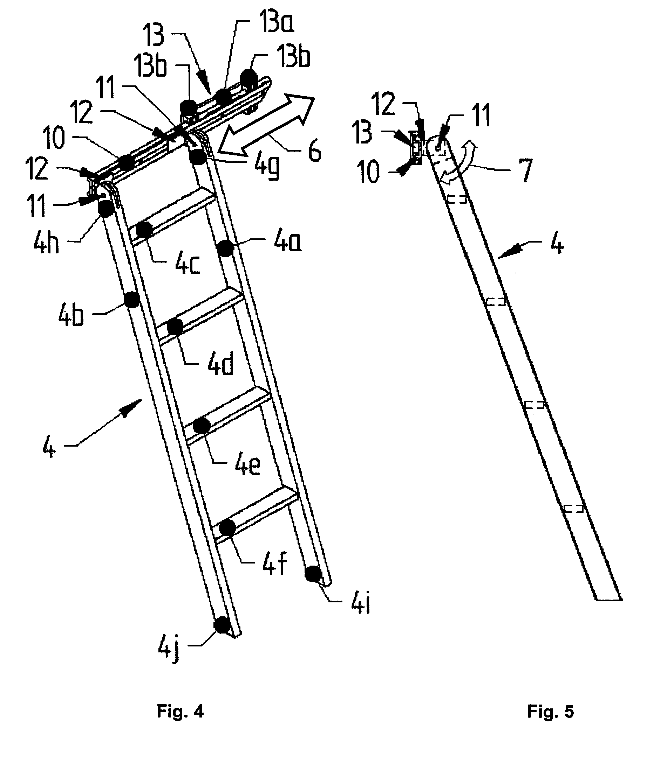

Danach wird gemäß Figur 2 die Leiter 4 mittels der Linearführung 10, 13 (Figuren 4, 5) aus der Ausnehmung 8 des Rahmens 3 des Hubbetts 1 von einer oberen Staustellung in Linearverschiebungsrichtung 6 herausgezogen, bis in einer oberen Zwischenstellung auch der innere Holm 4a, welcher näher zum Rahmen 3 des Betts 1 liegt, aus der Ausnehmung 8 heraustritt.

Schließlich wird gemäß Figur 3 mittels der Schwenkgelenke 11 (Figuren 4, 5) die Leiter 4 nach unten in Schwenkrichtung 7 in die untere Nutzposition abgeschwenkt.

In den Figuren 4 und 5 ist nun die Auszugsleiter 4 näher dargestellt, die aus zwei parallel zueinander beabstandeten Holmen 4a, 4b besteht und dazwischen befindliche zueinander beabstandete Sprossen 4c-4f, wie aus dem Stand der Technik bereits bekannt.

Am in der Nutzstellung oben befindlichen Ende 4g, 4h der Holme 4a, 4b ist nun je ein Schwenklager 11 vorhanden, welche an je einem Winkel 12 angebracht sind und um eine horizontale Achse gemeinsam schwenkbar ausgebildet sind. Da die Winkel 12 auf der C-förmigen Schiene 10 zueinander beabstandet befestigt sind, kann die Leiter 4 aus einer leicht aus der Senkrechten geneigten Nutzstellung (Figur 3) in eine horizontale Staustellung (Figuren 1 und 2) gebracht werden und analog umgekehrt wie oben beschrieben.

Die C-förmige Schiene 10 ist nun innerhalb der fest mit dem Rahmen 3 des Bettes 1 verbundenen ebenfalls C-förmigen Schienenführung 13 aufgenommen und dort quer zur Liegerichtung des Bettes 1 in den Schieberichtungen 6 verschiebbar geführt.

Die C-förmige Schienenführung 13 besteht aus einer Grundplatte 13a, auf der vier Führungsblöcke 13b angeordnet sind, die in der Vertikalen und in Schieberichtungen 6 zueinander beabstandet sind und somit vier Lagerpunkte für die C-förmige Schiene 10 bilden.

Die in der Nutzstellung unten befindlichen freien Enden 4i, 4j der Holme 4a, 4b werden in der Staustellung mittels einer L- oder U-förmigen Schiene 9 gelagert und während des Ausziehens in Schieberichtung 6 aus der Ausnehmung 8 des Rahmens 3 in dieser gleitend geführt. Diese unteren freien Enden 4i, 4j der Holme 4a, 4b sind jeweils derart abgeschrägt oder abgerundet, dass diese in der Nutzstellung der Leiter 4 auf dem Boden (nicht dargestellt) des Fahrzeugs satt aufliegen.

### Figurenlegende

- 1.: Hochbett/Hubbett
- 2.: Liegefläche/Matratze
- 3.: Rahmen von 1; 3a, 3b Breitseiten; 3c, 3d Längsseiten des Rahmens
- 4.: Leiter; 4a, 4b Holme; 4c-4f Sprossen; 4g, 4h obere Enden der Holme; 4i, 4j untere freie Enden der Holme
- 5.: Absenkrichtung von 1
- 6.: Linearverschiebungsrichtungen von 4
- 7.: Schwenkrichtungen von 4
- 8.: Aussparung in 3
- 9.: L-Schienenführung für 4
- 10.: C-Schienenführung von 4
- 11.: Schwenklager von 4
- 12.: Winkel für 11
- 13.: rahmenfeste C-Schienenführung für 10 an 3; 13a Grundplatte; 13b Führungsblöcke

## Patentansprüche

1. Hochbettleiter (4), insbesondere für ein Hubbett (1) für Fahrzeuge wie Wohnmobile oder Wohnwagen oder dergleichen, wobei das Bett (1) eine Liegefläche (2), einen Rahmen (3), sowie eine dazwischen befindliche Auflage wie z.B. Lattenrost aufweist, und wobei die Leiter (4) in ihrer oberen Stauposition unterhalb der Auflage der Liegefläche (2) verstaubar ist und aus dieser oberen Stauposition in eine obere Zwischenposition ausziehbar ist, sowie von dieser oberen Zwischenposition über mindestens zwei Schwenkgelenke (11) um eine etwa horizontale Achse in eine untere Nutzposition herabschwenkbar ist, **dadurch gekennzeichnet, dass** die Leiter (4) über ihre mindestens zwei Schwenkgelenke (11) mittelbar oder unmittelbar mit einer ausziehbaren Schiene (10) verbunden ist, welche das Ausziehen der Leiter (4) von ihrer oberen Stauposition in ihre obere Zwischenposition ermöglicht, und dass die Leiter (4) an der ausziehbaren Schiene (10) derart angebracht ist, dass die Längsachse der Leiter (4) in ihrer abgeschwenkten unteren Nutzposition etwa parallel zur Richtung desjenigen Rahmenteils (3c) des Rahmens (3) des Bettes (1) verläuft, welches dem Innenraum des Fahrzeugs zugewandt ist.

2. Hochbettleiter nach Anspruch 1, **dadurch gekennzeichnet, dass** die Schiene (10) mitsamt der Leiter (4) etwa quer zur Liegerichtung des Bettes (1) verschiebbar ist.

3. Hochbettleiter nach Anspruch 1 oder 2, **dadurch gekennzeichnet, dass** die Leiter (4) mit beiden Holmen (4a, 4b) über das Rahmenteil (3a, 3b) des Rahmens (3) des Bettes (1), welches dem Innenraum des Fahrzeugs zugewandt ist, derart hinaus verschiebbar ist, dass das obere Ende (4g) des inneren, dem Bett (1) zugewandten Holmes (4a) an dieses Rahmenteil (3a, 3b) angrenzt.

4. Hochbettleiter nach einem der Ansprüche 1 bis 3, **dadurch gekennzeichnet, dass** die Längsachse der Leiter (4) in ihrer abgeschwenkten unteren Nutzposition etwa parallel zur Liegerichtung des Bettes (1) liegt.

5. Hochbettleiter nach einem der Ansprüche 1 bis 4, **dadurch gekennzeichnet, dass** die Seitenholme (4a, 4b) der Leiter (4) zueinander etwa parallel oder leicht im Winkel von max. +/-10° verlaufen.

6. Hochbettleiter nach einem der Ansprüche 1 bis 5, **dadurch gekennzeichnet, dass** die Schwenkgelenke (11) an den oberen Enden (4g, 4h) der Seitenholme (4a, 4b) der Leiter (4) angeordnet sind.

7. Hochbettleiter nach einem der Ansprüche 1 bis 6, **dadurch gekennzeichnet, dass** die Schwenkgelenke (11) an der obersten Sprosse (4c) der Leiter (4) angeordnet sind, die benachbart zu den oberen Enden (4g, 4h) der Seitenholme (4a, 4b) der Leiter (4) ist.

8. Hochbettleiter nach einem der Ansprüche 1 bis 7, **dadurch gekennzeichnet, dass** die Schwenkgelenke (11) mittelbar über Winkelteile (12) oder einen U-Bügel mit der ausziehbaren Schiene (10) verbunden sind.

9. Hochbettleiter nach einem der Ansprüche 1 bis 8, **dadurch gekennzeichnet, dass** die ausziehbare Schiene (10) C- oder X-förmig ausgebildet ist.

10. Hochbettleiter nach einem der Ansprüche 1 bis 9, **dadurch gekennzeichnet, dass** die ausziehbare Schiene (10) in einer C- oder X-förmigen Führung (13), die mit dem Rahmen (3) fest verbunden ist, linear verschiebbar aufgenommen ist.

11. Hochbettleiter nach Anspruch 10, **dadurch gekennzeichnet, dass** die Führung (13) als Gleitführung oder Wälzkörperführung ausgebildet ist.

12. Hochbettleiter nach Anspruch 10 oder 11, **dadurch gekennzeichnet, dass** die Führung (13) teleskopierbar ist.

13. Hochbettleiter nach einem der Ansprüche 1 bis 12, **dadurch gekennzeichnet, dass** die ausziehbare Schiene (10) teleskopierbar ist.

14. Hochbettleiter nach einem der Ansprüche 1 bis 13, **dadurch gekennzeichnet, dass** die in der Nutzstellung unten befindlichen freien Enden (4i, 4j) der Holme (4a, 4b) der Leiter (4) in der oberen Staustellung mittels einer am Rahmen (3) des Bettes (1) befestigten L- oder U-förmigen Schiene (9) gelagert ist und in dieser während des Ausziehens der Leiter (4) in die obere Zwischenstellung gleitend geführt ist.

15. Hochbettleiter nach einem der Ansprüche 1 bis 14, **dadurch gekennzeichnet, dass** die Leiter (4) in ihrer oberen Stauposition unterhalb der Auflage der Liegefläche (2) des Bettes (1) in einer Ausnehmung (8) des Rahmens (3) des Bettes (1) aufgenommen ist und nicht oder nur geringfügig nach unten hin über den Rahmen (3) des Bettes (1) hinaus ragt.

16. Hochbettleiter nach einem der Ansprüche 1 bis 15, **dadurch gekennzeichnet, dass** die Liegerichtung des Bettes (1) quer oder parallel zur Fahrtrichtung des Fahrzeugs liegt.
